# EUROPEAN PATENT APPLICATION

(11) **EP 1 956 536 A2**
(43) Date of publication of application: **13.08.2008**
(21) Application number: 07113987.7
(22) Date of filing: 08.08.2007
(51) Int. Cl.: G06Q 10/00

(54) **Method, system and program for providing printed matter**

(30) Priority: 08.02.2007 JP 2007029476
(71) Applicant: Matsumoto Inc., Kitakyushu-shi, Fukuoka-ken 800-8555 (JP)
(72) Inventor: Matsumoto Keizaburo, Fukuoka 800-8555 (JP)
(74) Representative: Vossius & Partner

(57) **Abstract**

The present invention comprises content classifying means 24 for creating a content table 25 from content data, identification information of the content data, and content provider information received from a terminal device 12 of a content provider and stored in storage means 22; searching means 27 for searching the content table 25 using a keyword and a search formula obtained from a terminal device 13 of a recipient of printed matter, and identifying content that matches a search criterion; composition data generating means 29 for generating composition data from the content data of the specified content; sending means 30 for sending the composition data and delivery address information to a printing device 14; and billing means 31 for generating billing data for the content provider according to output quantity of the content from the sending means 30, thereby providing printed matter containing the selected content.

## Description

The present invention relates to a method, system and program for providing printed matter. More particularly, the present invention relates to the method and system for providing printed matter, capable of delivering printed matter having content selected by a recipient of printed matter via a screen displayed on a terminal device connected to a computer network to a delivery address designated by the recipient, and the program for executing the method and the system.

Informational magazines are one of the tools to obtain information on commercial products and services. In recent years, various informational magazines have been published, reflecting diversity in preference of recipients of printed matter. In addition to various pay magazines sold at low prices at bookstores, station kiosks, convenience stores, etc., free magazines distributed at stands installed, e.g., at stations have been increasingly published.
Although expense paid by a magazine reader is small, in many cases, information necessary for the reader is contained in only part of the articles and advertisements in the magazine. Thus, obtaining information through magazines is not efficient, and it may cause waste of resources.

Meanwhile, web search using a personal computer or a mobile terminal is becoming an effective way for collecting information as the Internet develops. The web search is advantageous in that the search can be carried out at home at any time. With the popularization of the mobile terminal, use of the web search in the outdoors, at travel destinations, etc. has become possible, which is another advantage of the web search.
However, in order to accurately find desired information from the flood of information on the Internet, a certain degree of skill and knowledge is required. Additionally, steps of selecting necessary information from unorganized information and outputting it, e.g., from a printer cause a great waste of time. Also, operation of the information equipment may be difficult especially for the elderly.
Since information printed on paper is more convenient than that displayed on a screen, information on a website and so forth found through a search is often printed out, e.g., with a printer. Information printed on paper is easily portable and thus the obtained information can be used anywhere. However, printing with a printer is more costly than printed matter such as books. Moreover, when the information is large in amount, the printed paper becomes disadvantageously bulky. Moreover, printing itself is difficult when the user is in the outdoors or uses the mobile terminal.

From the standpoint of information providers, on the other hand, the cost of placing advertisements in the informational magazines etc. is currently very high. Providing information through the Internet requires skill to establish infrastructure, prepare content, etc., and also, troubles and costs arising from maintaining the website and obtaining a certain number of page views are not negligible. Moreover, information providers must bear high costs before knowing whether the information will be actually used or not.

In recent years, with the development of an on-demand printing system, a system has been proposed in, e.g., Japanese Patent Application Publication No. 2003-242388, capable of quickly printing out content desired by a customer on a paper medium on the spot in the presentable form of printed matter and selling the printed matter to the customer.
Furthermore, e.g., Japanese Patent Application Publication No. 2002-82931 proposes an on-demand document preparation system capable of preparing and providing documents having different content for different customers.

However, a system for providing information has yet to be developed, capable of solving the problems of the informational magazines and Internet search found by the information senders and recipients.

The present invention has been made in view of the above circumstances, and an object thereof is to provide a method, system and program for providing printed matter, capable of reducing costs, and saving time and troubles for both information providers and information recipients.

A first aspect of the present invention provides a method for providing printed matter using a computer connected to a computer network, the printed matter having content selected by a recipient of the printed matter via a screen displayed on a terminal device connected to the computer network, the method comprising the steps of:
(A) receiving content data, identification information of the content data, and content provider information from a terminal device of a content provider via the computer network by data input/output means of the computer, and storing the content data, the identification information, and the content provider information in storage means of the computer;
(B) creating, by content classifying means of the computer, a content table in which the content provider information and the identification information are stored for each of the content data stored in the storage means;
(C) acquiring a keyword and a search formula necessary to identify content desired by the recipient from the terminal device of the recipient via the computer network, and storing the keyword and the search formula in the storage means by keyword acquisition means of the computer;
(D) searching the content table using the acquired keyword and search formula, and identifying content that matches a search criterion by searching means of the computer;
(E) reading content data of the identified content from the storage means, and generating composition data using the content data by composition data generating means of the computer;
(F) acquiring delivery address information of the printed matter from the terminal device of the recipient by the data input/output means, and storing the delivery address information in the storage means;
(G) sending the composition data and the delivery address information to a printing device connected to the computer by sending means of the computer; and
(H) generating billing data for the content provider by billing means of the computer according to output quantity of the content.

According to the method for providing printed matter of the present invention, for example, the printed matter having content selected by the recipient is prepared in response to a request of the recipient. Therefore, the content provider can provide the recipient with only information required by the recipient as printed matter while eliminating the waste of resources accompanied by preparation and delivery of unnecessary printed matter. Meanwhile, the recipient can quickly obtain the printed matter containing desired content only. The printed matter is sent to a delivery address designated by the recipient. Accordingly, the recipient of the printed matter can obtain the printed matter containing only necessary information even at his/her travel destination etc. The fee is charged to the content provider according to the output quantity of the printed matter. Thus, the recipient can obtain the printed matter containing necessary content with little trouble and expense. Furthermore, the content provider can provide content without paying a large cost in advance, and also easily evaluate cost-effectiveness of advertisements based on the billing data which is proportional to the output quantity.

It is preferable that the method further comprises, prior to the step (A), the step of (I) providing a function to edit image and text data on a screen of the terminal device of the content provider and generate the content data for the terminal device of the content provider by editing means of the computer via the data input/output means.
Because the content data can be generated by editing the image and text data on the screen displayed on the terminal device of the content provider, the content data can be easily generated without knowledge or experience of the preparation of manuscripts for printing.

The method may further comprise, between the steps (D) and (E), the step of (J) displaying a list of the content that matches the search criterion on the screen of the terminal device of the recipient to allow the recipient to select desired content, acquiring information on the selected content from the terminal device of the recipient via the data input/output means, and storing the information in the storage means by content selecting means of the computer,
wherein the step (E) includes generating the composition data by the composition data generating means using content data of the content selected from the identified content.
According to the method, the recipient can select desired content from the list of the content that matches the search criterion, and thus the composition data are generated from the selection result obtained from the terminal device of the recipient. As a result, the printed matter in which only the content desired by the recipient is printed can be provided.

The second aspect of the present invention provides a system for providing printed matter, comprising:
data input/output means for sending and receiving data to and from a terminal device of a content provider and a terminal device of a recipient of printed matter via a computer network, the terminal devices being connected to the computer network;
storage means for storing content data, identification information of the content data, content provider information received from the terminal device of the content provider via the data input/output means, a keyword and a search formula to identify content desired by the recipient which are received from the terminal device of the recipient via the data input/output means, information on content selected by the recipient, and delivery address information of printed matter in which the selected content is printed;
content classifying means for creating a content table in which the content provider information and the identification information are stored for each of the content data stored in the storage means;
keyword acquisition means for acquiring the keyword and the search formula for identifying the content desired by the recipient from the terminal device of the recipient via the computer network;
searching means for searching the content table using the keyword and the search formula, and identifying content that matches a search criterion;
composition data generating means for generating composition data from content data of the identified content;
sending means for sending the composition data and the delivery address information to a printing device via the computer network; and
billing means for calculating output quantity for each of the content data sent from the sending means and generating billing data for the content provider according to the output quantity.
Here, the term "terminal device of the recipient of the printed matter" includes a mobile terminal such as a mobile phone as well as a personal computer etc. (the same hereinafter).

According to the system for providing printed matter of the present invention, for example, the printed matter having content selected by the recipient is prepared in response to a request of the recipient. Therefore, the content provider can provide the recipient with only information required by the recipient as printed matter while eliminating the waste of resources accompanied by preparation and delivery of unnecessary printed matter. Meanwhile, the recipient can quickly obtain the printed matter containing desired content only. The printed matter is sent to a delivery address designated by the recipient. Accordingly, the recipient of the printed matter can obtain the printed matter containing only necessary information even at his/her travel destination etc. The fee is charged to the content provider according to the output quantity of the printed matter. Thus, the recipient can obtain the printed matter containing necessary content with little trouble and expense. Furthermore, the content provider can provide content without paying a large cost in advance, and also easily evaluate cost-effectiveness of advertisements based on the billing data which is proportional to the output quantity.

It is preferable that the system further comprises editing means for providing the terminal device of the content provider with a function to edit image and text data on a screen of the terminal device of the content provider and generate the content data.
Since the content data can be generated by editing the image and text data on the screen displayed on the terminal device of the content provider, the content data can be easily generated without knowledge or experience in the preparation of manuscripts for printing.

The system may further comprise content selecting means for creating a list of candidates of the content identified by the searching means, sending the list to the terminal device of the recipient via the data input/output means to allow the recipient to select content to be printed, and receiving information on the selected content via the data input/output means,
wherein the composition data generating means generates the composition data from content data of the content selected from the identified content.
According to the system permits the recipient can select desired content from the list of the content that matches the search criterion, thereby generating the composition data from the selection result obtained from the terminal device of the recipient. As a result, the printed matter in which only the content desired by the recipient is printed can be provided.

A third aspect of the present invention provides a program for providing printed matter, making a computer connected to a computer network function as:
(A) means for receiving content data, identification information of the content data, and content provider information from a terminal device of a content provider via the computer network, and storing the content data, the identification information, and the content provider information in storage means of the computer;
(B) means for creating a content table in which the content provider information and the identification information are stored for each of the content data stored in the storage means;
(C) means for acquiring a keyword and a search formula for identifying content desired by a recipient of printed matter from a terminal device of the recipient via the computer network, and storing the keyword and the search formula in the storage means;
(D) means for searching the content table using the acquired keyword and search formula and identifying content that matches a search criterion;
(E) means for combining content data of the identified content and generating composition data;
(F) means for acquiring delivery address information of printed matter from the terminal device of the recipient after the generation of the composition data;
(G) means for sending the composition data and the delivery address information to a printing device; and
(H) means for generating billing data for the content provider according to output quantity of the content.
   According to the program for providing printed matter of the present invention, the system for providing printed matter for achieving the above effects is constructed in the computer connected to the computer network, thereby allowing execution of the method for providing printed matter.

It is preferable that the program further comprises (I) means for providing the terminal device of the content provider with a function to edit image and text data on a screen of the terminal device of the content provider and generate the content data.

The program may further comprise (J) means for displaying a list of the content that matches the search criterion on a screen of the terminal device of the recipient to allow the recipient to select desired content, and acquiring information on the selected content from the terminal device of the recipient, wherein the means (E) includes generating the composition data based on content data of the content selected from the identified content.

Referring to the accompanying drawings, one embodiment of the present invention is now described for a more complete understanding of the present invention.

FIG.1 is a descriptive illustration showing a system for providing printed matter according to one embodiment of the present invention connected to terminal devices via a computer network.
FIG. 2 is a block diagram showing a configuration of the system.
FIG. 3 is a sequence chart showing operation of the system.

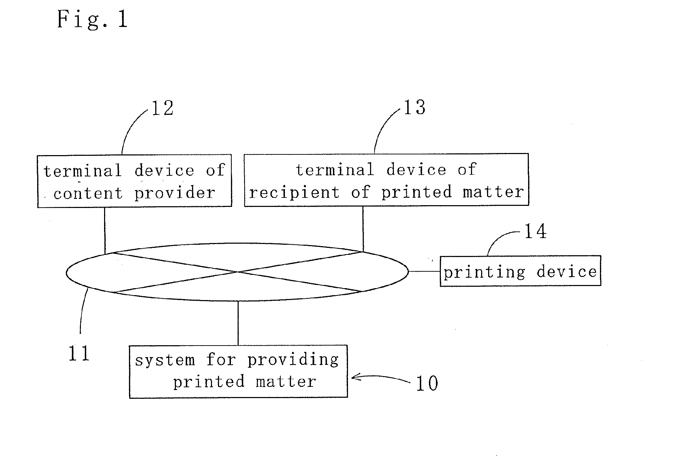

Referring to FIGS. 1 to 3, a system 10 for providing printed matter according to one embodiment of the present invention is described.
As shown in FIG. 1, the system 10 for providing printed matter is connected to a computer network 11. A terminal device 12 of a content provider, a terminal device 13 of a recipient of printed matter, and a printing device 14 are connected to the computer network 11.

The computer network 11 may be wired or wireless, and may be connected to the Internet.

The terminal device 12 of the content provider is connected to the system 10 for providing printed matter (hereinafter also simply referred to as "system") via the computer network 11. Since editing of content data is performed on a screen of the terminal device 12, the terminal device 12 is preferably a personal computer, a workstation, etc. having CPU, RAM, ROM and I/O therein.

The terminal device 13 of the recipient of printed matter is connected to the system 10 via the computer network 11. The terminal device 13 may be a mobile terminal such as a mobile phone as well as a personal computer and a workstation, as long as it is connectable to the computer network 11 and capable of receiving and sending data from and to the system 10.

The printing device 14 is connected to the system 10. The printing device 14 receives composition (form) data generated by the system 10, and produces printed matter. The printing device 14 may be connected to the system 10 either directly or via the computer network 11 as in the present embodiment.
The printing device 14 may be a page printer having only print functions, an information terminal having print functions installed, e.g., in a storefront of a convenience store, or the like.
However, the printing device 14 is preferably an on-demand printer having booklet-binding functions such as saddle-stitching, folding, and edge-trimming functions.

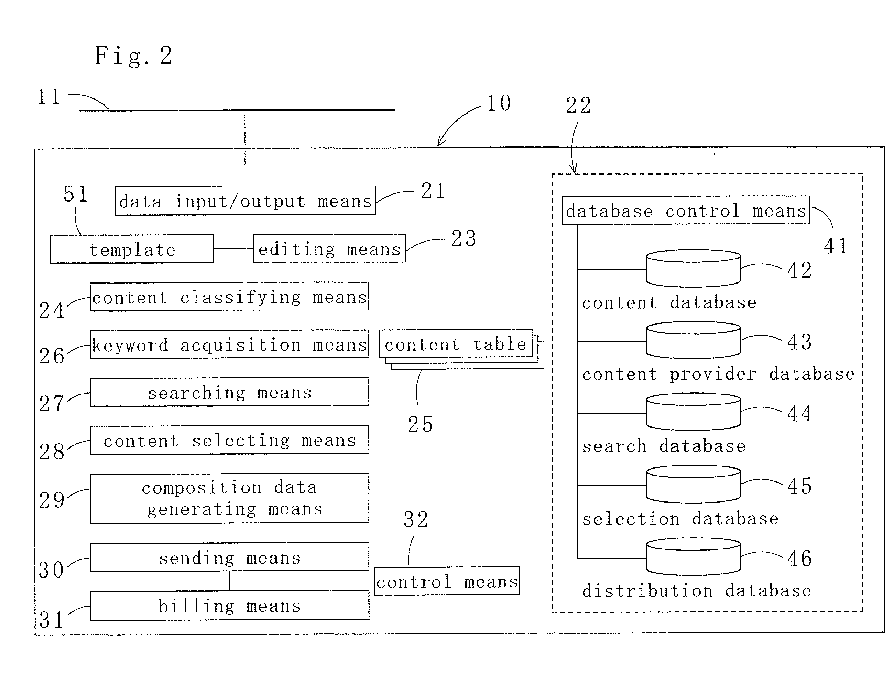

FIG. 2 shows a configuration of the system 10 for providing printed matter. The system 10 includes data input/output means 21, storage means 22, editing means 23, content classifying means 24, a content table 25, keyword acquisition means 26, searching means 27, content selecting means 28, composition data generating means 29, sending means 30, billing means 31, and control means 32 for controlling the entire system.
A program for providing printed matter loaded into a computer connected to the computer network 11 is executed by CPU. Accordingly, the computer functions as the data input/output means 21, the storage means 22, the editing means 23, the content classifying means 24, the content table 25, the keyword acquisition means 26, the searching means 27, the content selecting means 28, the composition data generating means 29, the sending means 30, the billing means 31, and the control means 32 for controlling the entire system.

The data input/output means 21 exchanges data required for production of printed matter with the terminal device 12 of the content provider and the terminal device 13 of the recipient through the computer network 11. A protocol (communication standard) used for the data transmission is not particularly limited, and any protocol used for transmission of text or image data on the computer network 11 may be employed. However, HTTP is preferable in that it is operable to exchange data using a web browser without installing special software.

The storage means 22 includes a plurality of databases configured on storage media of the computer such as a random access memory (RAM), a flash memory, and a hard disk, and database control means 41 for controlling input, output, and update of the databases.
The databases include content database 42, content provider database 43, search database 44, selection database 45, and distribution database 46. The content database 42 stores content data and identification information of the content data (also referred to as "identification information" hereinafter) received from the terminal device 12 of the content provider via the computer network 11, and the output quantity (output number) of the data. The content provider database 43 stores data (information) on the content provider received from the terminal device 12 via the computer network 11, and billing data for the content provider. The search database 44 stores keywords and search formulas received from the terminal device 13 of the recipient via the computer network 11, and search results obtained by searching the content data using the keywords and search formulas. The selection database 45 stores information on content selected by the recipient from the search results and a sequence of printing the selected content. The distribution database 46 stores composition data for producing printed matter, the number of copies, and delivery address information on the printed matter.

The editing means 23 provides a function as defined below for the terminal device 12 of the content provider via the computer network 11. The function allows the content provider to lay out image and text data, i.e., material for content using a template data stored in a template 51 and to generate the content data to be used as page layout data at the time of printing.
The content data generated as above is received from the terminal device 12 via the data input/output means 21, and is stored in the content database 42. At the same time, the identification information which is used as a retrieval key for searching the content data by the searching means 27 and information on the content provider are received from the terminal device 12 via the data input/output means 21, and respectively stored in the content database 42 and the content provider database 43.
Alternatively, content data created by the content provider without using the editing means 23 may be received directly from the terminal device 12 by the data input/output means 21 together with the identification information and the content provider information.

The content classifying means 24 creates the content table 25. The content table 25 contains the identification information and the content provider information for each of the content data received by the data input/output means 21 and stored in the storage means 22. Only the identification information received from the terminal device 12 of the content provider may be stored in the content table 25. Alternatively, the identification information received from the terminal device 12 and identification information extracted from the text data in the content data using any heretofore known method may be stored in the content table 25.

The keyword acquisition means 26 acquires information on the keywords and search formulas for identifying content desired by the recipient through the data input/output means 21 from the terminal device 13 of the recipient connected to the computer network 11.
The keywords and search formulas may be directly input as text, or extracted or created from the recipient's answers to a questionnaire form sent to the terminal device 13, or a combination of the both.
The information on the keywords and search formulas obtained in this manner is saved in the search database 44.

The searching means 27 searches the content table 25 using the keywords and search formulas stored in the search database 44, identifies information on content that matches the search criteria as candidates for content to be printed, and stores the information in the search database 44.
An algorithm used for the search is not particularly limited, and any heretofore known algorithm may be employed.

The content selecting means 28 generates selection screen data. The selection screen data contains a list of the candidates for content to be printed stored in the search database 44 and means for allowing the recipient to select content that he/she actually desires to print and to designate the order of printing. The content selecting means 28 sends the selection screen data to the terminal device 13 of the recipient connected to the computer network 11 via the data input/output means 21. Also, the content selecting means 28 receives, via the data input/output means 21, information on the content selected from the list by the recipient on the selection screen displayed on the terminal device 13 and data on the order of printing designated by the recipient. The content selecting means 28 then stores the information and the data in the selection database 45.
Furthermore, the content selecting means 28 receives the delivery address of printed matter, the number of copies, and information on the number of copies via the data input/output means 21 from the terminal device 13 of the recipient. The content selecting means 28 then stores them in the distribution database 46.
In the case the recipient of printed matter does not intend to select content to be printed from the list or designate the sequence of printing, the system 10 may be configured to allow the recipient to choose to skip the content selecting means (step) 28. Alternatively, without providing the content selecting means 28, the composition data may be created using the content data of all the content that matches the search criteria.
In these cases, the information on the content matching the search criteria that is stored in the search database 44 is directly copied to the selection database 45 as it is.

The composition data generating means 29 reads out the content data from the content database 42 using the information on the selected content and the data on the order of printing the content saved in the selection database 45, combines the content data in the designated order, and generates the composition data for producing printed matter. The composition data is converted to a predetermined file format such as PostScript or PDF (Portable Document Format) and stored in the distribution database 46 if required.
The distributing means 30 transmits the composition data, and the information on the number of copies and the delivery address stored in the distribution database 46 to the printing device 14.

The billing means 31 calculates the quantity of output for each content data delivered from the sending means 30 to the printing device 14, adds the calculated quantity to the output quantity which has already been stored in the content database 42, generates the billing data for the content provider based on the total output quantity in the content database 42, and stores the billing data in the content provider database 43. The billing means 31 charges the content provider according to the billing data, and sends the billing data to the terminal device 12 of the content provider via the data input/output means 21. The transmission of the billing data may be performed periodically. Alternatively, the transmission of the billing data may be performed every time a fee is charged so that the content provider can keep track of the billing status as needed.
Further alternatively, the system 10 may be provided with means for accessing the billing data stored in the content provider database 43 via the terminal device 12 in real time.
The content provider can evaluate the cost effectiveness of advertisements of the provided content based on the billing data, and decide whether or not to continue to provide content based on the evaluation.

If necessary, the system 10 may be provided with deleting means for deleting content via the data input/output means 21 from the terminal device 12, a database for storing usage history of the content provider and the recipient, etc.

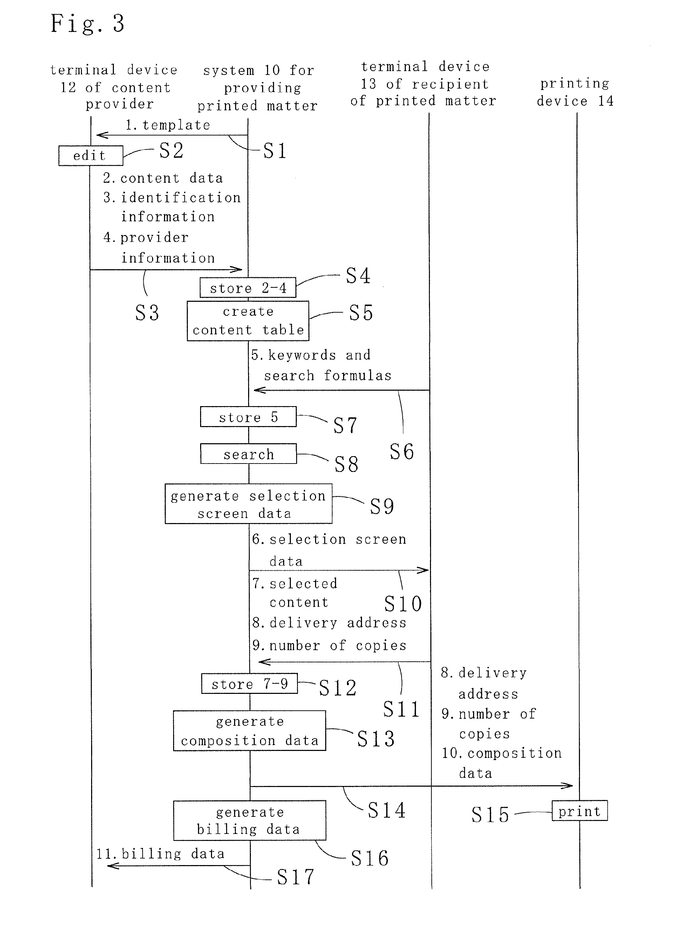

Referring to the sequence chart of FIG. 3, operation of the system 10 for providing printed matter, i.e., a method for providing printed matter using the system 10 is now described.
When the content provider accesses the system 10 from the terminal device 12 of the content provider via the computer network 11, inquiry is made via the data input/output means 21 as to whether or not to edit the content data on the screen. If the content provider chooses to edit the content data on the screen, the editing means 23 of the system 10 displays the template data stored in the template 51 on the screen of the terminal device 12 via the data input/output means 21 (S1).

The content provider edits the image and text data on the screen using the template data, thereby generating the content data (S2). When the content provider finishes editing the data, the system 10 makes an inquiry, via the data input/output means 21, as to whether or not to send the content data to the system 10. If the content provider chooses to send the content data, the data input/output means 21 sends an input form to input the identification information on the content data and the content provider information to the terminal device 12. The information input by the content provider and the edited content data are sent to the system 10 via the data input/output means 21 (S3).

The received content data and identification information are stored in the content database 42 and the received content provider information is stored in the content provider database 43 by the content classifying means 24 (S4).
Next, the content classifying means 24 creates the content table 25 which stores the identification information and content provider information for each content data. (S5)

When the recipient of printed matter accesses the system 10 from the terminal device 13 of the recipient via the computer network 11, the keyword acquisition means 26 sends the input form for inputting the keywords and search formulas to the terminal device 13 via the data input/output means 21. The keywords and search formulas input by the recipient are sent to the system 10 via the data input/output means 21 (S6).
The received keywords and search formulas are stored in the search database 44 by the keyword acquisition means 26 (S7).
Next, the searching means 27 searches the content table 25 using the keywords and search formulas, specifies the content data containing the identification information that matches the search criteria specified by the keywords and search formulas, and stores the specified content data in the search database 44 as the candidates for content to be printed (S8).

The content selecting means 28 generates the selection screen data. The selection screen data contains the list of the candidates for content to be printed stored in the search database 44 and the means for selecting content which the recipient actually intends to print (S9). Then, the selection screen data is sent to the terminal device 13 of the recipient via the data input/output means 21 (S 10).
The information on the content selected by the recipient on the terminal device 13 is received via the data input/output means 21 and stored in the selection database 45 by the content selecting means 28.
Next, the content selecting means 28 generates the selection screen data having the means for designating the order of printing the selected content, sends the data to the terminal device 13 via the data input/output means 21, and stores the order of printing designated by the recipient in the selection database 45. Furthermore, the information on the delivery address and the number of copies input by the recipient on the terminal device 13 is received via the data input/output means 21, and stored in the distribution database 46 by the content selecting means 28 (S11, S12).

The composition data generating means 29 retrieves the content data from the content database 42 using the information on the selected content and the data on the sequence of printing the content stored in the selection database 45, combines the content in the designated order, and generates the composition data for producing printed matter. Then, the composition data generating means 29 converts the data to a predetermined format such as a page description language according to need, and stores the composition data in the distribution database 46 (S13).
The sending means 30 sends the composition data, and the information on the number of copies and the delivery address stored in the distribution database 46 to the printing device 14 (S14).

The printing device 14 carries out printing using the composition data received from the sending means 30. In the case the printing device 14 is an on-demand printer, bookbinding may also be carried out. The printing is completed within several hours after the printing device 14 receives the content data from the sending means 30. The printing device 14 may also create mailing labels for delivery using the delivery address information received from the sending means 30. Alternatively, the delivery address may be printed on the front cover or the back cover of the printed matter (S15).
The printed matter is dispatched to the delivery address designated by the recipient via mail, parcel delivery service, etc.

The billing means 31 calculates the output quantity for each content data distributed from the sending means 30 to the printing device 14, and adds the calculated quantity to the output quantity already stored in the content database 42. Then, the billing means 31 generates the billing data for the content provider based on the total output quantity stored in the content database 42, and stores the billing data in the content provider database 43 (S16).
Also, the billing means 31 carries out fee charging such as issuance of invoices, automatic withdrawal from a bank account, etc. based on the billing data, and sends the billing data via the data input/output means 21 to the terminal device 12 of the content provider. The transmission of the billing data may be executed periodically. Alternatively, the data transmission may be performed every time a fee is charged so that the content provider can keep track of the billing status at any time.
Further alternatively, the content provider may access the billing data stored in the content provider database 43 through the terminal device 12 as needed by the means for accessing the billing data in real time. (S 17)

According to the method, system and program for providing printed matter of the present invention, the content provider can provide the recipient with only information required by the recipient in the form of printed matter while eliminating the waste of resources accompanied by preparation and delivery of unnecessary printed matter. Meanwhile, the recipient can quickly obtain the printed matter containing desired content only. Thus, the recipient can obtain the printed matter containing necessary content at a location specified by the recipient with little trouble and expense. Furthermore, the content provider can provide content without paying a large cost in advance, and also easily evaluate cost-effectiveness of advertisements based on the billing data in proportion to the output quantity.
Thus, cost, time and troubles of the content provider, i.e., an information provider and the recipient of the printed matter, i.e., an information recipient can be reduced.

## Claims

1. A method for providing printed matter using a computer connected to a computer network, the printed matter having content selected by a recipient of the printed matter via a screen displayed on a terminal device connected to the computer network, the method comprising the steps of:
(A) receiving content data, identification information of the content data, and content provider information from a terminal device of a content provider via the computer network by data input/output means of the computer, and storing the content data, the identification information, and the content provider information in storage means of the computer;
(B) creating, by content classifying means of the computer, a content table in which the content provider information and the identification information are stored for each of the content data stored in the storage means;
(C) acquiring a keyword and a search formula necessary to identify content desired by the recipient from the terminal device of the recipient via the computer network, and storing the keyword and the search formula in the storage means by keyword acquisition means of the computer;
(D) searching the content table using the acquired keyword and search formula, and identifying content that matches a search criterion by searching means of the computer;
(E) reading content data of the identified content from the storage means, and generating composition data using the content data by composition data generating means of the computer;
(F) acquiring delivery address information of the printed matter from the terminal device of the recipient by the data input/output means, and storing the delivery address information in the storage means;
(G) sending the composition data and the delivery address information to a printing device connected to the computer by sending means of the computer; and
(H) generating billing data for the content provider by billing means of the computer according to output quantity of the content.

2. The method as defined in claim 1, further comprising, prior to the step (A), the step of (I) providing a function to edit image and text data on a screen of the terminal device of the content provider and generate the content data for the terminal device of the content provider by editing means of the computer via the data input/output means.

3. The method as defined in claim 1 or 2, further comprising, between the steps (D) and (E), the step of (J) displaying a list of the content that matches the search criterion on the screen of the terminal device of the recipient to allow the recipient to select desired content, acquiring information on the selected content from the terminal device of the recipient via the data input/output means, and storing the information in the storage means by content selecting means of the computer,
wherein the step (E) includes generating the composition data by the composition data generating means using content data of the content selected from the identified content.

4. A system for providing printed matter, comprising:
data input/output means for sending and receiving data to and from a terminal device of a content provider and a terminal device of a recipient of printed matter via a computer network, the terminal devices being connected to the computer network;
storage means for storing content data, identification information of the content data, content provider information received from the terminal device of the content provider via the data input/output means, a keyword and a search formula to identify content desired by the recipient which are received from the terminal device of the recipient via the data input/output means, information on content selected by the recipient, and delivery address information of printed matter in which the selected content is printed;
content classifying means for creating a content table in which the content provider information and the identification information are stored for each of the content data stored in the storage means;
keyword acquisition means for acquiring the keyword and the search formula for identifying the content desired by the recipient from the terminal device of the recipient via the computer network;
searching means for searching the content table using the keyword and the search formula, and identifying content that matches a search criterion;
composition data generating means for generating composition data from content data of the identified content;
sending means for sending the composition data and the delivery address information to a printing device via the computer network; and
billing means for calculating output quantity for each of the content data sent from the sending means and generating billing data for the content provider according to the output quantity.

5. The system as defined in claim 4, further comprising editing means for providing the terminal device of the content provider with a function to edit image and text data on a screen of the terminal device of the content provider and generate the content data.

6. The system as defined in claim 4 or 5, further comprising content selecting means for creating a list of candidates of the content identified by the searching means, sending the list to the terminal device of the recipient via the data input/output means to allow the recipient to select content to be printed, and receiving information on the selected content via the data input/output means,
wherein the composition data generating means generates the composition data from content data of the content selected from the identified content.

7. A program for providing printed matter, making a computer connected to a computer network function as:
(A) means for receiving content data, identification information of the content data, and content provider information from a terminal device of a content provider via the computer network, and storing the content data, the identification information, and the content provider information in storage means of the computer;
(B) means for creating a content table in which the content provider information and the identification information are stored for each of the content data stored in the storage means;
(C) means for acquiring a keyword and a search formula for identifying content desired by a recipient of printed matter from a terminal device of the recipient via the computer network, and storing the keyword and the search formula in the storage means;
(D) means for searching the content table using the acquired keyword and search formula and identifying content that matches a search criterion;
(E) means for combining content data of the identified content and generating composition data;
(F) means for acquiring delivery address information of printed matter from the terminal device of the recipient after the generation of the composition data;
(G) means for sending the composition data and the delivery address information to a printing device; and
(H) means for generating billing data for the content provider according to output quantity of the content.

8. The program as defined in claim 7, further comprising (I) means for providing the terminal device of the content provider with a function to edit image and text data on a screen of the terminal device of the content provider and generate the content data.

9. The program as defined in claim 7 or 8, further comprising (J) means for displaying a list of the content that matches the search criterion on a screen of the terminal device of the recipient to allow the recipient to select desired content, and acquiring information on the selected content from the terminal device of the recipient,
wherein the means (E) includes generating the composition data based on content data of the content selected from the identified content.
